# EUROPEAN PATENT SPECIFICATION

(11) **EP 3 331 292 B1**
(45) Date of publication and mention of the grant of the patent: **29.12.2021**
(21) Application number: 15902030.4
(22) Date of filing: 27.08.2015
(51) Int. Cl.: H04W 52/02, H04W 56/00

(54) **METHOD AND DEVICE FOR INDICATING SYNCHRONOUS SIGNAL PERIOD**
VERFAHREN UND VORRICHTUNG ZUR ANZEIGE VON SYNCHRONER SIGNALPERIODE
PROCÉDÉ ET DISPOSITIF PERMETTANT D'INDIQUER UNE PÉRIODE DE SIGNAL SYNCHRONE

(43) Date of publication of application: 06.06.2018
(73) Proprietor: Huawei Technologies Co., Ltd., Longgang District Shenzhen, Guangdong 518129 (CN)
(72) Inventor: QU, Bingyu, Shenzhen Guangdong 518129 (CN); HE, Chuanfeng, Shenzhen Guangdong 518129 (CN)
(74) Representative: Goddar, Heinz J.
(86) International application number: PCT/CN2015/088282
(87) International publication number: WO 2017/031759

(56) References cited:
- EP-A1- 2 323 454
- EP-A1- 2 819 338
- WO-A1-2014/165712
- CN-A- 103 200 665
- CN-A- 103 795 668
- CN-A- 104 219 758
- CN-A- 104 660 362
- US-A1- 2014 211 781
- US-A1- 2015 078 369
- None

## Description

### TECHNICAL FIELD

The present invention relates to the field of communications technologies, and in particular, to a method for indicating a synchronization signal period and an apparatus.

### BACKGROUND

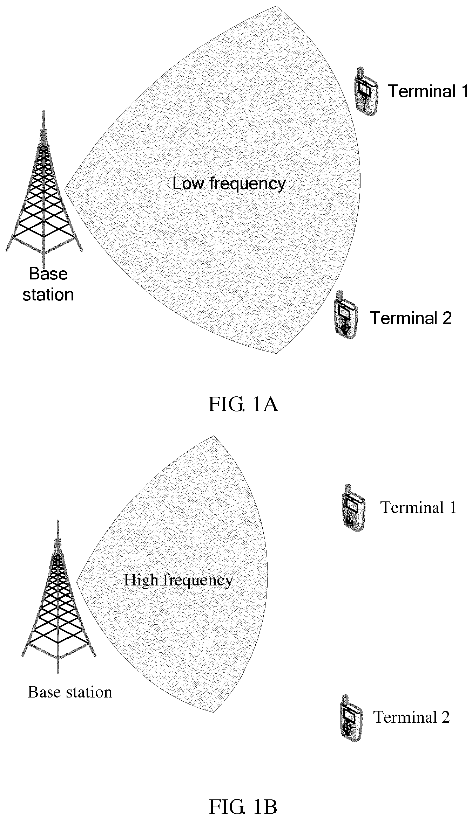

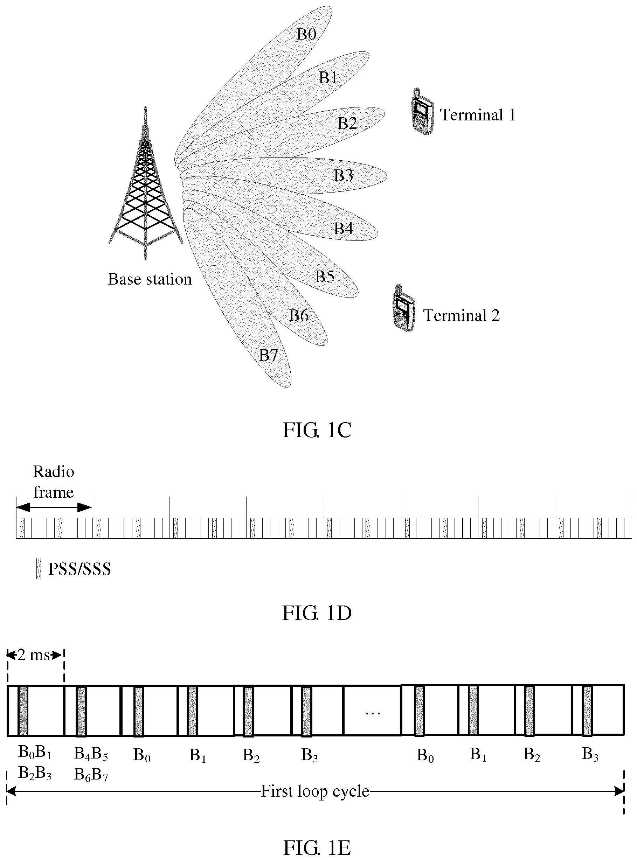

In a low frequency scenario, a beam formed at each antenna port is a wide beam shown in FIG. 1A, and can cover users in an entire cell because a path loss of a radio signal is relatively small in the scenario.

However, in a high frequency scenario, a path loss of a radio signal increases. If the signal is still transmitted by using a wide beam, because coverage of a cell is small, the wide beam cannot cover a terminal at a relatively long distance. As shown in FIG. 1B, the wide beam cannot cover a terminal 1 and a terminal 2. In the high frequency scenario, a distance between antennas may decrease. Therefore, a quantity of antennas that can be accommodated per unit area increases. To enable the terminal at the relatively long distance to receive the radio signal, a massive MIMO (Multiple-Input Multiple-Output, multiple-input multiple-output) beamforming (Beamforming) technology may be used to obtain a high antenna gain to compensate for the path loss, as shown in FIG. 1C.

A base station using the massive MIMO technology includes many or even hundreds of antennas. A width of a formed beam is narrow when a high antenna gain is obtained. One narrow beam only covers a part of a region, and cannot cover all users in a cell. For example, in FIG. 1C, a beam B2 can cover only a terminal 1 and cannot cover a terminal 2.

In the high frequency scenario using the massive MIMO technology, a terminal is mobile, and different beams may need to serve a cell by means of time division. Synchronization signals need to be broadcast by using the beams, so that terminals in a cell can access the cell according to the synchronization signals.

A synchronization signal in an existing LTE (Long Term Evolution, Long Term Evolution) system includes a PSS (Primary Synchronization Signal, primary synchronization signal) and an SSS (Secondary Synchronous Signal, secondary synchronization signal). FIG. 1D is a schematic diagram in which a synchronization signal is carried in a radio frame. In the LTE system, a base station periodically transmits a synchronization signal. A terminal detects the synchronization signal, implements initial synchronization and obtains a physical cell identifier according to the detected synchronization signal, and then accesses a cell.

In the high frequency scenario, a terminal accesses a cell mainly in single-loop and dual-loop manners. Because the dual-loop access manner has disadvantages such as relatively low overheads, relatively little interference, and low energy consumption of a base station, the dual-loop access advantages is currently a main manner for accessing a cell by a terminal.

A main idea of dual-loop access is: A base station periodically performs beam scanning in a first loop. A terminal detects synchronization signals for all beams, and feeds back corresponding beam identifiers to the base station. The base station determines an effective beam according to the received beam identifiers, and then transmits a synchronization signal for the effective beam in a second loop. As shown in FIG. IE, assuming that after beam scanning in the first loop, the terminal feeds back beam identifiers corresponding to BO to B3, and the base station determines that BO to B3 are effective beams, the base station periodically transmits synchronization signals for BO to B3 in the second loop.

However, because the terminal does not know a period of a synchronization signal that is periodically sent by the base station for an effective beam and that is detected by the terminal, the terminal needs to continuously perform blind detection for the synchronization signal for the effective beam, leading to disadvantages of poor synchronization performance and relatively high power consumption.

EP 2 323 454 A1 discloses a communication system capable of reducing processing loads imposed on a base station device and a server that sets a timing of a synchronization signal for the base station device. A management server provides notification of a transmission order of the synchronization signal to each of a plurality of base station devices. The each of the plurality of base station devices immediately transmits the synchronization Signal to a terminal device based on a timing of an already-operating clock in a case of receiving notification indicating the first in transmission order from the management server, and, in a case of receiving notification indicating another transmission order than the first from the management server, receives a synchronization signal transmitted at the earliest timing from another base station device, to thereby transmit the synchronization signal to the terminal device at a timing calculated based on a reception timing of the received synchronization signal and the transmission order received by an own device.

### SUMMARY

The present invention provides methods for indicating a synchronization signal period of claims 1 and 2, a base station of claim 3 and a terminal of claim 4, so as to avoid disadvantages of poor synchronization performance and relatively high power consumption in a process of accessing a cell by a terminal in the prior art.

The embodiments of the present invention provide the method for indicating a synchronization signal period. In the solutions, the base station indicates the synchronization signal period to the terminal, and after determining the synchronization signal period, the terminal receives a synchronization signal of a corresponding beam according to the synchronization signal period. No blind detection needs to be performed for the synchronization signal. Therefore, disadvantages of poor synchronization performance and relatively high power consumption in a current process of accessing a cell by the terminal are avoided.

### BRIEF DESCRIPTION OF DRAWINGS

FIG. 1A is a schematic diagram of a wide beam in a low frequency scenario in the prior art;
FIG. 1B is a schematic diagram of a wide beam in a high frequency scenario in the prior art;
FIG. 1C is a schematic diagram of a narrow beam in a high frequency scenario in the prior art;
FIG. 1D is a schematic diagram of a radio frame carrying a synchronization signal in the prior art;
FIG. 1E is a schematic diagram of transmitting a synchronization signal in a dual-loop manner in the prior art;
FIG. 2A is a flowchart of indicating a synchronization signal period according to an embodiment of the present invention;
FIG. 2B is a schematic diagram of a correspondence between a synchronization signal and a physical channel according to an embodiment of the present invention;
FIG. 3 is another flowchart of indicating a synchronization signal period according to an embodiment of the present invention;
FIG. 4A is a schematic diagram of a base station according to an embodiment of the present invention;
FIG. 4B is another schematic diagram of a base station according to an embodiment of the present invention;
FIG. 5A is a schematic diagram of a terminal according to an embodiment of the present invention; and
FIG. 5B is another schematic diagram of a terminal according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the following, implementations of the present invention are described in detail with reference to the accompanying drawings. It should be understood that the embodiments described herein are merely used to illustrate and explain the present invention, but are not intended to limit the present invention. In addition, the embodiments of this application and features in the embodiments may be mutually combined in a case in which they do not conflict with each other.

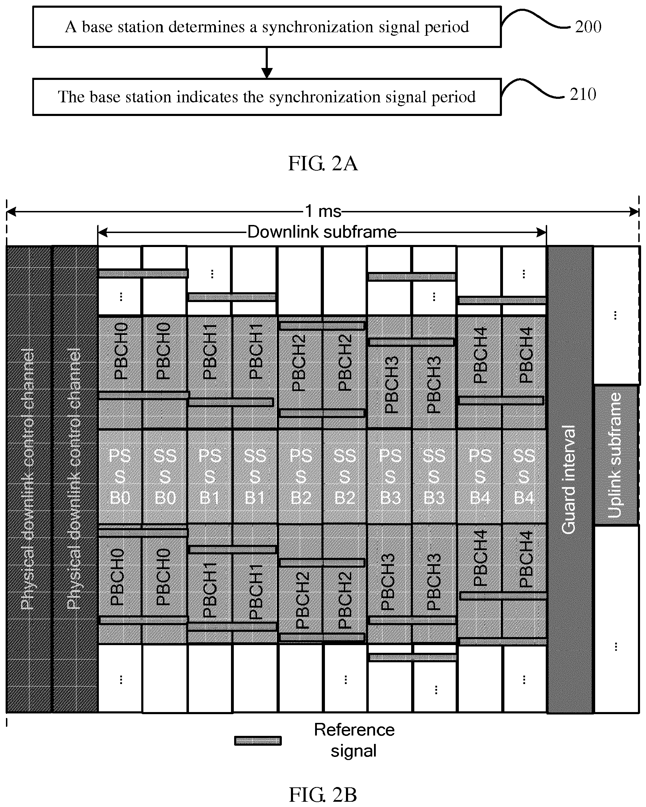

Referring to FIG. 2A, in an embodiment of the present invention, a procedure of indicating a synchronization signal period is as follows:

Step 200: A base station determines a synchronization signal period.

Step 210: The base station indicates the synchronization signal period.

In this way, after the base station indicates the synchronization signal period, the terminal detects a synchronization signal according to the synchronization signal period indicated by the base station, and the terminal knows a time interval for detecting the synchronization signal, thereby preventing the terminal from performing blind detection for the synchronization signal, and avoiding disadvantages of poor synchronization performance and relatively high power consumption in a current process of accessing a cell by the terminal.

In this embodiment of the present invention, before the base station indicates the synchronization signal period, the following operation is further included:
transmitting, by the base station, a synchronization signal.

In this embodiment of the present invention, there are multiple manners for indicating the synchronization signal period by the base station. Optionally, the following several manners may be used.

The base station indicates the synchronization signal period by using the synchronization signal.

When the base station indicates the synchronization signal period by using the synchronization signal, optionally, the following manner may be used:
determining, by the base station, a synchronization signal sequence corresponding to the synchronization signal period, and transmitting a synchronization signal that uses the synchronization signal sequence.

For example, the synchronization signal may use a synchronization signal sequence 1 and a synchronization signal sequence 2. The synchronization signal sequence 1 corresponds to a synchronization signal period 1, and the synchronization signal sequence 2 corresponds to a synchronization signal period 2. If the synchronization signal period determined by the base station is the synchronization signal period 1, the base station transmits a synchronization signal that uses the synchronization signal sequence 1.

For another example, the synchronization signal may use a synchronization signal sequence 1 and a synchronization signal sequence 2. The synchronization signal sequence 1 corresponds to a synchronization signal period 1, and the synchronization signal sequence 2 corresponds to a synchronization signal period 2. If the synchronization signal period determined by the base station is the synchronization signal period 2, the base station transmits a synchronization signal that uses the synchronization signal sequence 2.

In this embodiment of the present invention, each synchronization signal has a corresponding physical channel. In this way, the synchronization signal period can be indicated according to a physical channel corresponding to the synchronization signal.

In this embodiment of the present invention, optionally, the physical channel may be a PBCH (Physical Broadcast Channel, physical broadcast channel), or certainly may be another physical channel. Details are not described herein.

As shown in FIG. 2B, it can be learned from FIG. 2B that a PSS0/SSS0 corresponds to a PBCH0, a PSS1/SSS1 corresponds to a PBCH1, a PSS2/SSS2 corresponds to a PBCH2, a PSS3/SSS3 corresponds to a PBCH3, and a PSS4/SSS4 corresponds to a PBCH4. In this way, the synchronization signal period can be indicated according to a physical channel corresponding to the synchronization signal.

Therefore, in this embodiment of the present invention, before the base station indicates the synchronization signal period, the following operation is further included:
transmitting, by the base station, a physical channel corresponding to the synchronization signal; and
when the base station indicates the synchronization signal period, optionally, the following manner may be used:
   indicating, by the base station, the synchronization signal period by using the physical channel corresponding to the synchronization signal.

In this embodiment of the present invention, the following several manners may be used for the physical channel:
the physical channel carries information including the synchronization signal period; or
the physical channel is scrambled by using a scrambling code corresponding to the synchronization signal period; or
a CRC (Cyclic Redundancy Check, cyclic redundancy check) corresponding to the physical channel is masked by using a mask corresponding to the synchronization signal period; or
a CRC computation mode corresponding to the physical channel corresponds to the synchronization signal period; or
the physical channel is carried at a time-frequency resource location corresponding to the synchronization signal period.

That is, when the base station indicates the synchronization signal period by using the physical channel corresponding to the synchronization signal, optionally, the following manners may be used:
adding, by the base station, the information including the synchronization signal period to the physical channel, to indicate the synchronization signal period; or
determining, by the base station according to a specified correspondence between a synchronization signal period and a scrambling code, the scrambling code corresponding to the synchronization signal period that is to be indicated, and scrambling the physical channel by using the determined scrambling code, to indicate the synchronization signal period; or
determining, by the base station according to a specified correspondence between a synchronization signal period and a mask, the mask corresponding to the synchronization signal period that is to be indicated, and masking the cyclic redundancy check (CRC) corresponding to the physical channel by using the mask, to indicate the synchronization signal period; or
determining, by the base station according to a specified correspondence between a synchronization signal period and a CRC computation mode, the CRC computation mode corresponding to the synchronization signal period that is to be indicated, performing CRC computation on initial information in the determined CRC computation mode to obtain a CRC value, and transmitting the initial information and the calculated CRC value on the physical channel, to indicate the synchronization signal period; or
determining, by the base station according to a specified correspondence between a synchronization signal period and a time-frequency resource location, the time-frequency resource location corresponding to the synchronization signal period that is to be indicated, and adding the physical channel to the determined time-frequency resource location, to indicate the synchronization signal period.

For example, the physical channel may carry 14 bits of information. Information carried on four bits is used to indicate a downlink system bandwidth, a system frame number, and a PHICH (Physical HARQ Indicator Channel, physical hybrid automatic repeat request indicator channel) configuration, and 10 bits are idle. If there are totally four synchronization signal periods, two bits need to be used to indicate the synchronization signal period. For example, two bits "01" indicate that the synchronization signal period is a first synchronization signal period, two bits "10" indicate that the synchronization signal period is a second synchronization signal period, two bits "00" indicate that the synchronization signal period is a third synchronization signal period, and two bits "11" indicate that the synchronization signal period is a fourth synchronization signal period.

For another example, the scrambling code for scrambling the physical channel includes a scrambling code 1 and a scrambling code 2. The scrambling code 1 corresponds to a synchronization signal period 1, and the scrambling code 2 corresponds to a synchronization signal period 2. If the base station determines that the synchronization signal period is the synchronization signal period 1, the base station scrambles the physical channel by using the scrambling code 1. If the base station determines that the synchronization signal period is the synchronization signal period 2, the base station scrambles the physical channel by using the scrambling code 2.

In this way, when the terminal detects the physical channel, if the terminal implements a correct CRC check by using the scrambling code 1, it is considered that the synchronization signal period is the synchronization signal period 1, or if the terminal implements a correct CRC check by using the scrambling code 2, it is considered that the synchronization signal period is the synchronization signal period 2.

For another example, the mask for masking the CRC includes a mask 1 and a mask 2. The mask 1 corresponds to a synchronization signal period 1, and the mask 2 corresponds to a synchronization signal period 2. If the base station determines that the synchronization signal period is the synchronization signal period 1, the base station masks the CRC by using the mask code 1. If the base station determines that the synchronization signal period is the synchronization signal period 2, the base station masks the CRC by using the mask 2.

In this way, when the terminal performs a CRC check, if the terminal implements a correct CRC check by using the mask 1, it is considered that the synchronization signal period is the synchronization signal period 1, or if the terminal implements a correct CRC check by using the mask 2, it is considered that the synchronization signal period is the synchronization signal period 2.

For another example, the CRC computation mode includes a CRC computation mode 1 and a CRC computation mode 2. The CRC computation mode 1 corresponds to a synchronization signal period 1, and the CRC computation mode 2 corresponds to a synchronization signal period 2. If the base station determines that the synchronization signal period is the synchronization signal period 1, the base station masks the CRC in the CRC computation mode 1. If the base station determines that the synchronization signal period is the synchronization signal period 2, the base station masks the CRC by using the mask 2.

In this way, when performing blind detection on the physical channel, the terminal performs CRC computation on received information in the CRC computation mode 1 and the CRC computation mode 2, and compares results with a received CRC. If a correct CRC check is implemented in the CRC computation mode 1, it is considered that the synchronization signal period corresponding to the physical channel is the synchronization signal period 1. If a correct CRC check is implemented in the CRC computation mode 2, it is considered that the synchronization signal period corresponding to the physical channel is the synchronization signal period 2.

In this embodiment of the present invention, optionally, the physical channel corresponding to the synchronization signal is: a physical channel sent on a same symbol that is used to transmit the synchronization signal; or a physical channel sent on a frequency-domain resource associated with the synchronization signal; or a physical channel sent by using a same beam that is used to transmit the synchronization signal; or a physical channel sent by using a scrambling code associated with the synchronization signal; or a physical channel sent by using a mask associated with the synchronization signal.

In this solution, the base station indicates the synchronization signal period to the terminal, and after determining the synchronization signal period, the terminal receives a synchronization signal of a corresponding beam according to the synchronization signal period. No blind detection needs to be performed for the synchronization signal. Therefore, disadvantages of poor synchronization performance and relatively high power consumption in a current process of accessing a cell by the terminal are avoided.

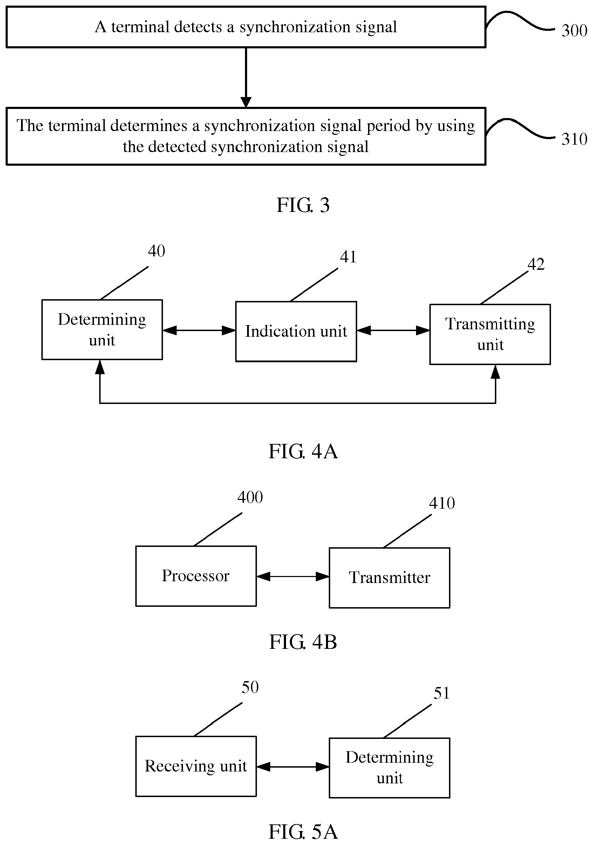

Referring to FIG. 3, in an embodiment of the present invention, a procedure of indicating a synchronization signal period is as follows:

Step 300: A terminal detects a synchronization signal.

Step 310: The terminal determines a synchronization signal period by using the detected synchronization signal.

In this way, after the terminal determines the synchronization signal period, the terminal knows a time interval for detecting the synchronization signal, thereby preventing the terminal from performing blind detection for the synchronization signal, and further avoiding disadvantages of poor synchronization performance and relatively high power consumption in a current process of accessing a cell by the terminal.

In this embodiment of the present invention, there are multiple manners for determining the synchronization signal period by the terminal by using the detected synchronization signal. Optionally, the following manner may be used:
determining, by the terminal, a synchronization signal sequence used for the detected synchronization signal; and
determining, by the terminal, a synchronization signal period corresponding to the synchronization signal sequence.

For example, the synchronization signal may use a synchronization signal sequence 1 and a synchronization signal sequence 2. The synchronization signal sequence 1 corresponds to a synchronization signal period 1, and the synchronization signal sequence 2 corresponds to a synchronization signal period 2. If the synchronization signal period detected by the terminal is the synchronization signal period 1, the terminal subsequently detects the synchronization signal by using the synchronization signal period 1.

For another example, the synchronization signal may use a synchronization signal sequence 1 and a synchronization signal sequence 2. The synchronization signal sequence 1 corresponds to a synchronization signal period 1, and the synchronization signal sequence 2 corresponds to a synchronization signal period 2. If the synchronization signal period detected by the terminal is the synchronization signal period 2, the terminal subsequently detects the synchronization signal by using the synchronization signal period 2.

According to the foregoing description, the terminal determines the synchronization signal period by using the synchronization signal sequence of the synchronization signal. During application, each synchronization signal has a corresponding physical channel. In this way, the synchronization signal period can be indicated according to a physical channel corresponding to the synchronization signal.

In this embodiment of the present invention, optionally, the physical channel may be a PBCH (Physical Broadcast Channel, physical broadcast channel), or certainly may be another physical channel. Details are not described herein. As shown in FIG. 2B, it can be learned from FIG. 2B that a PSS0/SSS0 corresponds to a PBCH0, a PSS1/SSS1 corresponds to a PBCH1, a PSS2/SSS2 corresponds to a PBCH2, a PSS3/SSS3 corresponds to a PBCH3, and a PSS4/SSS4 corresponds to a PBCH4. In this way, the synchronization signal period can be indicated according to a physical channel corresponding to the synchronization signal.

Therefore, in this embodiment of the present invention, before the terminal determines the synchronization signal period by using the detected synchronization signal, the following operation is further included:
determining, by the terminal, the physical channel corresponding to the synchronization signal.

In this case, when the terminal determines the synchronization signal period by using the detected synchronization signal, the following manner may be used:
determining, by the terminal, the synchronization signal period according to the physical channel.

That is, the terminal may determine the synchronization signal period by using the synchronization signal sequence of the synchronization signal, or may determine the synchronization signal period by using the physical channel corresponding to the synchronization signal.

When the terminal determines the synchronization signal period by using the physical channel, optionally, the following manners may be used:
determining, by the terminal, a synchronization signal period by using information that includes the synchronization signal period and that is carried on the physical channel; or
determining, by the terminal, a scrambling code for scrambling the physical channel, and determining a synchronization signal period according to the scrambling code; or
determining, by the terminal, a mask for masking a CRC corresponding to the physical channel, and determining a synchronization signal period according to the mask; or
determining, by the terminal, a CRC computation mode that corresponds to the physical channel and in which a correct CRC check is implemented, and determining a synchronization signal period according to the CRC computation mode; or
determining, by the terminal, a time-frequency resource location at which the physical channel is carried, and determining a synchronization signal period according to the time-frequency resource location.

That is, when the terminal determines the synchronization signal period by using the physical channel, optionally, the following manners may be used:
determining, by the terminal, the information that includes the synchronization signal period and that is carried on the physical channel, and determining the synchronization signal period in the information; or
determining, by the terminal, the scrambling code for scrambling the physical channel, searching a specified correspondence between a synchronization signal period and a scrambling code for the synchronization signal period corresponding to the scrambling code, and using the found synchronization signal period as the determined synchronization signal period; or
determining, by the terminal, the mask for masking the cyclic redundancy check (CRC) corresponding to the physical channel, searching a specified correspondence between a synchronization signal period and a mask for the synchronization signal period corresponding to the mask, and using the found synchronization signal period as the determined synchronization signal period; or
receiving, by the terminal, initial information and a CRC value on the physical channel, performing CRC computation on the initial information in all stored CRC computation modes to obtain corresponding CRC values, using a CRC value that is in the calculated CRC values and that is the same as the received CRC value as a target CRC value, using a CRC computation mode corresponding to the target CRC value as a target CRC computation mode, searching a specified correspondence between a synchronization signal period and a CRC computation mode for a synchronization signal period corresponding to the target CRC computation mode, and using the found synchronization signal period as the determined synchronization signal period; or
determining, by the terminal, the time-frequency resource location at which the physical channel is carried, searching a specified correspondence between a synchronization signal period and a time-frequency resource location for the synchronization signal period corresponding to the time-frequency resource location at which the physical channel is carried, and using the found synchronization signal period as the determined synchronization signal period.

For example, the physical channel may carry 14 bits of information. Information carried on four bits is used to indicate a downlink system bandwidth, a system frame number, and a PHICH configuration, and 10 bits are idle. If there are totally four synchronization signal periods, two bits need to be used to indicate the synchronization signal period. For example, two bits "01" indicate that the synchronization signal period is a first synchronization signal period, two bits "10" indicate that the synchronization signal period is a second synchronization signal period, two bits "00" indicate that the synchronization signal period is a third synchronization signal period, and two bits "11" indicate that the synchronization signal period is a fourth synchronization signal period. In this case, if "00" is carried in specified bits in the information that is carried on the physical channel and that is received by the terminal, the synchronization signal period determined by the terminal is the third synchronization signal period. If "01" is carried in specified bits in the information that is carried on the physical channel and that is received by the terminal, the synchronization signal period determined by the terminal is the first synchronization signal period.

For another example, the scrambling code for scrambling the physical channel includes a scrambling code 1 and a scrambling code 2. The scrambling code 1 corresponds to a synchronization signal period 1, and the scrambling code 2 corresponds to a synchronization signal period 2. If the terminal implements a correct CRC check by descrambling the physical channel by using the scrambling code 1, the terminal determines that the synchronization signal period is the synchronization signal period 1. If the terminal implements a correct CRC check by descrambling the physical channel by using the scrambling code 2, the terminal determines that the synchronization signal period is the synchronization signal period 2.

For another example, the mask for masking the CRC includes a mask 1 and a mask 2. The mask 1 corresponds to a synchronization signal period 1, and the mask 2 corresponds to a synchronization signal period 2. When the terminal performs a CRC check, if the terminal implements a correct CRC check by using the mask 1, it is considered that the synchronization signal period is the synchronization signal period 1, or if the terminal implements a correct CRC check by using the mask 2, it is considered that the synchronization signal period is the synchronization signal period 2.

For another example, the CRC computation mode includes a CRC computation mode 1 and a CRC computation mode 2. The CRC computation mode 1 corresponds to a synchronization signal period 1, and the CRC computation mode 2 corresponds to a synchronization signal period 2. When performing blind detection on the physical channel, the terminal performs CRC computation on received information in the CRC computation mode 1 and the CRC computation mode 2, and compares results with a received CRC. If a correct CRC check is implemented in the CRC computation mode 1, it is considered that the synchronization signal period corresponding to the physical channel is the synchronization signal period 1. If a correct CRC check is implemented in the CRC computation mode 2, it is considered that the synchronization signal period corresponding to the physical channel is the synchronization signal period 2.

In this embodiment of the present invention, optionally, the physical channel corresponding to the synchronization signal is: a physical channel sent on a same symbol that is used to transmit the synchronization signal; or a physical channel sent on a frequency-domain resource associated with the synchronization signal; or a physical channel sent by using a same beam that is used to transmit the synchronization signal; or a physical channel sent by using a scrambling code associated with the synchronization signal; or a physical channel sent by using a mask associated with the synchronization signal.

In this solution, the base station indicates the synchronization signal period to the terminal, and after determining the synchronization signal period, the terminal receives a synchronization signal of a corresponding beam according to the synchronization signal period. No blind detection needs to be performed for the synchronization signal. Therefore, disadvantages of poor synchronization performance and relatively high power consumption in a current process of accessing a cell by the terminal are avoided.

Referring to FIG. 4A, in an embodiment of the present invention, a base station is provided. The base station includes a determining unit 40 and an indication unit 41.

The determining unit 40 is configured to determine a synchronization signal period.

The indication unit 41 is configured to indicate the synchronization signal period.

Further, the base station further includes a transmitting unit 42, configured to transmit a synchronization signal.

When indicating the synchronization signal period, the indication unit 41 is specifically configured to:
indicate the synchronization signal period by using the synchronization signal.

Further, the determining unit 40 is further configured to determine a synchronization signal sequence corresponding to the synchronization signal period.

When transmitting the synchronization signal, the transmitting unit 42 is specifically configured to:
transmit a synchronization signal that uses the synchronization signal sequence.

Further, the transmitting unit 42 is further configured to transmit a physical channel corresponding to the synchronization signal.

When indicating the synchronization signal period, the indication unit 41 is specifically configured to:
indicate the synchronization signal period by using the physical channel corresponding to the synchronization signal.

Optionally, when indicating the synchronization signal period by using the physical channel corresponding to the synchronization signal, the indication unit 41 is specifically configured to:
add information including the synchronization signal period to the physical channel, to indicate the synchronization signal period; or
determine, according to a specified correspondence between a synchronization signal period and a scrambling code, a scrambling code corresponding to the synchronization signal period that is to be indicated, and scramble the physical channel by using the determined scrambling code, to indicate the synchronization signal period; or
determine, according to a specified correspondence between a synchronization signal period and a mask, a mask corresponding to the synchronization signal period that is to be indicated, and mask a cyclic redundancy check (CRC) corresponding to the physical channel by using the mask, to indicate the synchronization signal period; or
determine, according to a specified correspondence between a synchronization signal period and a CRC computation mode, a CRC computation mode corresponding to the synchronization signal period that is to be indicated, perform CRC computation on initial information in the determined CRC computation mode to obtain a CRC value, and transmit the initial information and the calculated CRC value on the physical channel, to indicate the synchronization signal period; or
determine, according to a specified correspondence between a synchronization signal period and a time-frequency resource location, a time-frequency resource location corresponding to the synchronization signal period that is to be indicated, and add the physical channel to the determined time-frequency resource location, to indicate the synchronization signal period.

Referring to FIG. 4B, this embodiment of the present invention further provides another base station. The base station includes a processor 400.

The processor 400 is configured to: determine a synchronization signal period, and indicate the synchronization signal period.

It should be noted that the processor 400 is further configured to perform other operations performed by the determining unit 40 and the indication unit 41. The base station further includes a transmitter 410. The transmitter 410 is configured to perform an operation performed by the transmitting unit 42.

Referring to FIG. 5A, in an embodiment of the present invention, a terminal is provided. The terminal includes a receiving unit 50 and a determining unit 51.

The receiving unit 50 is configured to detect a synchronization signal.

The determining unit 51 is configured to determine a synchronization signal period by using the detected synchronization signal.

In this embodiment of the present invention, optionally, when determining the synchronization signal period by using the detected synchronization signal, the determining unit 51 is specifically configured to:
determine a synchronization signal sequence used for the detected synchronization signal; and
determine a synchronization signal period corresponding to the synchronization signal sequence.

Further, the determining unit 51 is further configured to determine a physical channel corresponding to the synchronization signal.

When determining the synchronization signal period by using the detected synchronization signal, the determining unit 51 is specifically configured to:
determine the synchronization signal period by using the physical channel.

Optionally, when determining the synchronization signal period by using the physical channel, the determining unit 51 is specifically configured to:
determine information that includes the synchronization signal period and that is carried on the physical channel, and determine the synchronization signal period in the information; or
determine a scrambling code for scrambling the physical channel, search a specified correspondence between a synchronization signal period and a scrambling code for a synchronization signal period corresponding to the scrambling code, and use the found synchronization signal period as the determined synchronization signal period; or
determine a mask for masking a cyclic redundancy check (CRC) corresponding to the physical channel, search a specified correspondence between a synchronization signal period and a mask for a synchronization signal period corresponding to the mask, and use the found synchronization signal period as the determined synchronization signal period; or
receive initial information and a CRC value on the physical channel, perform CRC computation on the initial information in all stored CRC computation modes to obtain corresponding CRC values, use a CRC value that is in the calculated CRC values and that is the same as the received CRC value as a target CRC value, use a CRC computation mode corresponding to the target CRC value as a target CRC computation mode, search a specified correspondence between a synchronization signal period and a CRC computation mode for a synchronization signal period corresponding to the target CRC computation mode, and use the found synchronization signal period as the determined synchronization signal period; or
determine a time-frequency resource location at which the physical channel is carried, search a specified correspondence between a synchronization signal period and a time-frequency resource location for a synchronization signal period corresponding to the time-frequency resource location at which the physical channel is carried, and use the found synchronization signal period as the determined synchronization signal period.

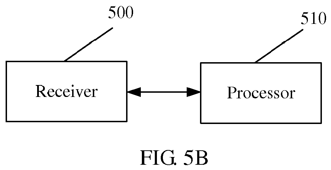

Referring to FIG. 5B, this embodiment of the present invention further provides another terminal. The terminal includes a receiver 500 and a processor 510.

The receiver 500 is configured to detect a synchronization signal.

The processor 510 is configured to determine a synchronization signal period by using the detected synchronization signal.

It should be noted that the receiver 500 is further configured to perform another operation performed by the receiving unit 50, and the processor 510 is further configured to perform another operation performed by the determining unit 51.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept.

Apparently, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

## Claims

1. A method for indicating a synchronization signal period, the synchronization signal period being applied by a base station having multiple antennas for one or more effective beams in a second loop of a dual-loop access, the method comprising:
transmitting, by the base station, in a first loop of the dual-loop access, first synchronization signals for a plurality of beams;
receiving, by the base station, in the first loop of the dual-loop access, beam identifiers from a terminal;
determining, by the base station, the one or more effective beams based on the received beam identifiers;
determining (200), by the base station, the synchronization signal period for the second loop of the dual-loop access;
transmitting, by the base station, a physical channel corresponding to a second synchronization signal to the terminal;
indicating (210), by the base station, the synchronization signal period by using the physical channel corresponding to the second synchronization signal to the terminal;
wherein the indicating (210), by the base station, the synchronization signal period by using the physical channel corresponding to the second synchronization signal comprises:
determining, by the base station according to a specified correspondence between a synchronization signal period and a scrambling code, a scrambling code corresponding to the synchronization signal period that is to be indicated, and scrambling the physical channel by using the determined scrambling code, to indicate the synchronization signal period; or
determining, by the base station according to a specified correspondence between a synchronization signal period and a mask, a mask corresponding to the synchronization signal period that is to be indicated, and masking a cyclic redundancy check, CRC, corresponding to the physical channel by using the mask, to indicate the synchronization signal period; or
determining, by the base station according to a specified correspondence between a synchronization signal period and a CRC computation mode, a CRC computation mode corresponding to the synchronization signal period that is to be indicated, performing CRC computation on initial information in the determined CRC computation mode to obtain a CRC value, and transmitting the initial information and the calculated CRC value on the physical channel, to indicate the synchronization signal period; or
determining, by the base station according to a specified correspondence between a synchronization signal period and a time-frequency resource location, a time-frequency resource location corresponding to the synchronization signal period that is to be indicated, and adding the physical channel to the determined time-frequency resource location, to indicate the synchronization signal period.

2. A method for indicating a synchronization signal period, the synchronization signal period being applied by a base station having multiple antennas for one or more effective beams in a second loop of a dual-loop access, the method comprising:
detecting, by a terminal, in a first loop of the dual-loop access, first synchronization signals of a plurality of beams that have been transmitted by the base station;
sending, by the terminal, in the first loop of the dual-loop access, beam identifiers to the base station based on the detected first synchronization signals;
detecting (300), by the terminal, a second synchronization signal transmitted by the base station in the second loop of the dual-loop access;
determining, by the terminal, a physical channel corresponding to the second synchronization signal;
determining (310), by the terminal, the synchronization signal period by using the detected second synchronization signal by using the physical channel;
wherein the determining (310), by the terminal, the synchronization signal period by using the physical channel comprises:
determining, by the terminal, a scrambling code for scrambling the physical channel, searching a specified correspondence between a synchronization signal period and a scrambling code for a synchronization signal period corresponding to the scrambling code, and using the found synchronization signal period as the determined synchronization signal period; or
determining, by the terminal, a mask for masking a cyclic redundancy check (CRC) corresponding to the physical channel, searching a specified correspondence between a synchronization signal period and a mask for a synchronization signal period corresponding to the mask, and using the found synchronization signal period as the determined synchronization signal period; or
receiving, by the terminal, initial information and a CRC value on the physical channel, performing CRC computation on the initial information in all stored CRC computation modes to obtain corresponding CRC values, using a CRC value that is in the calculated CRC values and that is the same as the received CRC value as a target CRC value, using a CRC computation mode corresponding to the target CRC value as a target CRC computation mode, searching a specified correspondence between a synchronization signal period and a CRC computation mode for a synchronization signal period corresponding to the target CRC computation mode, and using the found synchronization signal period as the determined synchronization signal period; or
determining, by the terminal, a time-frequency resource location at which the physical channel is carried, searching a specified correspondence between a synchronization signal period and a time-frequency resource location for a synchronization signal period corresponding to the time-frequency resource location at which the physical channel is carried, and using the found synchronization signal period as the determined synchronization signal period.

3. A base station having multiple antennas and being configured for indicating a synchronization signal period, the synchronization signal period being applied by the base station for one or more effective beams in a second loop of a dual-loop access,
wherein the base station is configured to transmit, in a first loop of the dual-loop access, first synchronization signals for a plurality of beams;
wherein the base station is further configured to receive, in the first loop of the dual-loop access, beam identifiers from a terminal;
wherein the base station is further configured to determine the one or more effective beams based on the received beam identifiers; and
wherein the base station comprises:
a determining unit (40), configured to determine the synchronization signal period for the second loop of the dual-loop access;
a transmitting unit (42), configured to transmit a physical channel corresponding to a second synchronization signal to the terminal; and
an indication unit (41), configured to indicate the synchronization signal period to the terminal,
wherein, when indicating the synchronization signal period by using the physical channel corresponding to the second synchronization signal, the indication unit (41) is specifically configured to:
determine, according to a specified correspondence between a synchronization signal period and a scrambling code, a scrambling code corresponding to the synchronization signal period that is to be indicated, and scramble the physical channel by using the determined scrambling code, to indicate the synchronization signal period; or
determine, according to a specified correspondence between a synchronization signal period and a mask, a mask corresponding to the synchronization signal period that is to be indicated, and mask a cyclic redundancy check, CRC, corresponding to the physical channel by using the mask, to indicate the synchronization signal period; or
determine, according to a specified correspondence between a synchronization signal period and a CRC computation mode, a CRC computation mode corresponding to the synchronization signal period that is to be indicated, perform CRC computation on initial information in the determined CRC computation mode to obtain a CRC value, and transmit the initial information and the calculated CRC value on the physical channel, to indicate the synchronization signal period; or
determine, according to a specified correspondence between a synchronization signal period and a time-frequency resource location, a time-frequency resource location corresponding to the synchronization signal period that is to be indicated, and add the physical channel to the determined time-frequency resource location, to indicate the synchronization signal period.

4. A terminal, comprising:
a receiving unit (50), configured to detect a synchronization signal transmitted by a base station; and
a determining unit (51), configured to determine a synchronization signal period, the synchronization signal period being applied by a base station having multiple antennas for one or more effective beams in a second loop of a dual-loop access;
wherein the terminal is configured to detect, in a first loop of the dual-loop access, first synchronization signals of a plurality of beams that have been transmitted by the base station;
wherein the terminal is further configured to send, in the first loop of the dual-loop access, beam identifiers to the base station based on the detected first synchronization signals; and
wherein the determining unit is configured to determine the synchronization signal period applied by the base station in the second loop of the dual-loop access by using a detected second synchronization signal; and configured to determine a physical channel corresponding to the second synchronization signal;
wherein, when determining the synchronization signal period by using the detected second synchronization signal, the determining unit (51) is specifically configured to:
determine the synchronization signal period by using the physical channel, and
determine a scrambling code for scrambling the physical channel, search a specified correspondence between a synchronization signal period and a scrambling code for a synchronization signal period corresponding to the scrambling code, and use the found synchronization signal period as the determined synchronization signal period; or
determine a mask for masking a cyclic redundancy check, CRC, corresponding to the physical channel, search a specified correspondence between a synchronization signal period and a mask for a synchronization signal period corresponding to the mask, and use the found synchronization signal period as the determined synchronization signal period; or
receive initial information and a CRC value on the physical channel, perform CRC computation on the initial information in all stored CRC computation modes to obtain corresponding CRC values, use a CRC value that is in the calculated CRC values and that is the same as the received CRC value as a target CRC value, use a CRC computation mode corresponding to the target CRC value as a target CRC computation mode, search a specified correspondence between a synchronization signal period and a CRC computation mode for a synchronization signal period corresponding to the target CRC computation mode, and use the found synchronization signal period as the determined synchronization signal period; or
determine a time-frequency resource location at which the physical channel is carried, search a specified correspondence between a synchronization signal period and a time-frequency resource location for a synchronization signal period corresponding to the time-frequency resource location at which the physical channel is carried, and use the found synchronization signal period as the determined synchronization signal period.

## Patentansprüche

1. Verfahren zum Angeben eines Synchronisationssignalzeitraums, wobei der Synchronisationssignalzeitraum durch eine Basisstation, die mehrere Antennen für einen oder mehrere wirksame Strahlen aufweist, in einer zweiten Schleife eines Zweischleifenzugangs angewandt wird, wobei das Verfahren Folgendes umfasst:
Übertragen, durch die Basisstation, in einer ersten Schleife des Zweischleifenzugangs von ersten Synchronisationssignalen für eine Vielzahl von Strahlen;
Empfangen, durch die Basisstation, in der ersten Schleife des Zweischleifenzugangs, von Strahlkennungen von einem Endgerät;
Bestimmen, durch die Basisstation, des einen oder der mehreren wirksamen Strahlen auf der Grundlage der empfangenen Strahlkennungen;
Bestimmen (200), durch die Basisstation, des Synchronisationssignalzeitraums für die zweite Schleife des Zweischleifenzugangs;
Übertragen, durch die Basisstation, eines physischen Kanals, der einem zweiten Synchronisationssignal entspricht, an das Endgerät;
Angeben (210), durch die Basisstation, des Synchronisationssignalzeitraums unter Verwendung des physischen Kanals, der dem zweiten Synchronisationssignal entspricht, an das Endgerät;
wobei das Angeben (210), durch die Basisstation, des Synchronisationssignalzeitraums unter Verwendung des physischen Kanals, der dem zweiten Synchronisationssignal entspricht, Folgendes umfasst:
Bestimmen, durch die Basisstation gemäß einer spezifizierten Entsprechung zwischen einem Synchronisationssignalzeitraum und einem Verwürfelungscode, eines Verwürfelungscodes, der dem Synchronisationssignalzeitraum, der angegeben werden soll, entspricht, und Verwürfeln des physischen Kanals unter Verwendung des bestimmten Verwürfelungscodes, um den Synchronisationssignalzeitraum anzugeben; oder
Bestimmen, durch die Basisstation gemäß einer spezifizierten Entsprechung zwischen einem Synchronisationssignalzeitraum und einer Maske, einer Maske, die dem Synchronisationssignalzeitraum, der angegeben werden soll, entspricht, und Maskieren einer zyklischen Redundanzprüfung, CRC, die dem physischen Kanal entspricht, unter Verwendung der Maske, um den Synchronisationssignalzeitraum anzugeben; oder
Bestimmen, durch die Basisstation gemäß einer spezifizierten Entsprechung zwischen einem Synchronisationssignalzeitraum und einem CRC-Berechnungsmodus, eines CRC-Berechnungsmodus, der dem Synchronisationssignalzeitraum, der angegeben werden soll, entspricht, Durchführen von CRC-Berechnung an Anfangsinformationen in dem bestimmten CRC-Berechnungsmodus, um einen CRC-Wert zu erhalten, und Übertragen der Anfangsinformationen und des berechneten CRC-Werts auf dem physischen Kanal, um den Synchronisationssignalzeitraum anzugeben; oder
Bestimmen, durch die Basisstation gemäß einer spezifizierten Entsprechung zwischen einem Synchronisationssignalzeitraum und einem Zeit-Frequenz-Ressourcenort, eines Zeit-Frequenz-Ressourcenorts, der dem Synchronisationssignalzeitraum, der angegeben werden soll, entspricht, und Hinzufügen des physischen Kanals zu dem bestimmten Zeit-Frequenz-Ressourcenort, um den Synchronisationssignalzeitraum anzugeben.

2. Verfahren zum Angeben eines Synchronisationssignalzeitraums, wobei der Synchronisationssignalzeitraum durch eine Basisstation, die mehrere Antennen für einen oder mehrere wirksame Strahlen aufweist, in einer zweiten Schleife eines Zweischleifenzugangs angewandt wird, wobei das Verfahren Folgendes umfasst:
Detektieren, durch ein Endgerät, in einer ersten Schleife des Zweischleifenzugangs von ersten Synchronisationssignalen von einer Vielzahl von Strahlen, die durch die Basisstation übertragen wurden;
Senden, durch das Endgerät, in der ersten Schleife des Zweischleifenzugangs, von Strahlkennungen an die Basisstation auf der Grundlage der detektierten ersten Synchronisationssignale;
Detektieren (300), durch das Endgerät, eines zweiten Synchronisationssignals, das durch die Basisstation in der zweiten Schleife des Zweischleifenzugangs übertragen wurde;
Bestimmen, durch das Endgerät, eines physischen Kanals, der dem zweiten Synchronisationssignal entspricht;
Bestimmen (310), durch das Endgerät, des Synchronisationssignalzeitraums unter Verwendung des detektierten Synchronisationssignals unter Verwendung des physischen Kanals;
wobei das Bestimmen (310), durch das Endgerät, des Synchronisationssignalzeitraums unter Verwendung des physischen Kanals Folgendes umfasst:
Bestimmen, durch das Endgerät, eines Verwürfelungscodes zum Verwürfeln des physischen Kanals, Suchen nach einer spezifizierten Entsprechung zwischen einem Synchronisationssignalzeitraum und einem Verwürfelungscode für einen Synchronisationssignalzeitraum, der dem Verwürfelungscode entspricht, und Verwenden des gefundenen Synchronisationssignalzeitraums als den bestimmten Synchronisationssignalzeitraum; oder
Bestimmen, durch das Endgerät, einer Maske zum Maskieren einer zyklischen Redundanzprüfung bzw. CRC, die dem physischen Kanal entspricht, Suchen nach einer spezifizierten Entsprechung zwischen einem Synchronisationssignalzeitraum und einer Maske für einen Synchronisationssignalzeitraum, der der Maske entspricht,
und Verwenden des gefundenen Synchronisationssignalzeitraums als den bestimmten Synchronisationssignalzeitraum; oder
Empfangen, durch das Endgerät, von Anfangsinformationen und eines CRC-Werts auf dem physischen Kanal, Durchführen von CRC-Berechnung an den Anfangsinformationen in allen gespeicherten CRC-Berechnungsmodi, um entsprechende CRC-Werte zu erhalten, Verwenden eines CRC-Werts, der sich in den berechneten CRC-Werten befindet und der derselbe wie der empfangene CRC-Wert ist, als einen Ziel-CRC-Wert, Verwenden eines CRC-Berechnungsmodus, der dem Ziel-CRC-Wert entspricht, als einen Ziel-CRC-Berechnungsmodus, Suchen nach einer spezifizierten Entsprechung zwischen einem Synchronisationssignalzeitraum und einem CRC-Berechnungsmodus für einen Synchronisationssignalzeitraum, der dem Ziel-CRC-Berechnungsmodus entspricht, und Verwenden des gefundenen Synchronisationssignalzeitraums als den bestimmten Synchronisationssignalzeitraum; oder
Bestimmen, durch das Endgerät, eines Zeit-Frequenz-Ressourcenorts, an welchem der physische Kanal geführt wird, Suchen nach einer spezifizierten Entsprechung zwischen einem Synchronisationssignalzeitraum und einem Zeit-Frequenz-Ressourcenort für einen Synchronisationssignalzeitraum, der dem Zeit-Frequenz-Ressourcenort, an welchem der physische Kanal geführt wird, entspricht, und Verwenden des gefundenen Synchronisationssignalzeitraums als den bestimmten Synchronisationssignalzeitraum.

3. Basisstation, die mehrere Antennen aufweist und ausgelegt ist zum Angeben eines Synchronisationssignalzeitraums, wobei der Synchronisationssignalzeitraum durch die Basisstation für einen oder mehrere wirksame Strahlen in einer zweiten Schleife eines Zweischleifenzugangs angewandt wird,
wobei die Basisstation ausgelegt ist zum Übertragen, in einer ersten Schleife des Zweischleifenzugangs, von ersten Synchronisationssignalen für eine Vielzahl von Strahlen;
wobei die Basisstation ferner ausgelegt ist zum Empfangen, in der ersten Schleife des Zweischleifenzugangs, von Strahlkennungen von einem Endgerät;
wobei die Basisstation ferner ausgelegt ist zum Bestimmen des einen oder der mehreren wirksamen Strahlen auf der Grundlage der empfangenen Strahlkennungen; und
wobei die Basisstation Folgendes umfasst:
eine Bestimmungseinheit (40), ausgelegt zum Bestimmen des Synchronisationssignalzeitraums für die zweite Schleife des Zweischleifenzugangs;
eine Übertragungseinheit (42), ausgelegt zum Übertragen eines physischen Kanals, der einem zweiten Synchronisationssignal entspricht, an das Endgerät; und
eine Angabeeinheit (41), ausgelegt zum Angeben des Synchronisationssignalzeitraums an das Endgerät,
wobei, wenn der Synchronisationssignalzeitraum unter Verwendung des physischen Kanals, der dem zweiten Synchronisationssignal entspricht, angegeben wird, die Angabeeinheit (41) insbesondere ausgelegt ist zum:
Bestimmen, gemäß einer spezifizierten Entsprechung zwischen einem Synchronisationssignalzeitraum und einem Verwürfelungscode, eines Verwürfelungscodes, der dem Synchronisationssignalzeitraum, der angegeben werden soll, entspricht, und Verwürfeln des physischen Kanals unter Verwendung des bestimmten Verwürfelungscodes, um den Synchronisationssignalzeitraum anzugeben; oder
Bestimmen, gemäß einer spezifizierten Entsprechung zwischen einem Synchronisationssignalzeitraum und einer Maske, einer Maske, die dem Synchronisationssignalzeitraum, der angegeben werden soll, entspricht, und Maskieren einer zyklischen Redundanzprüfung, CRC, die dem physischen Kanal entspricht, unter Verwendung der Maske, um den Synchronisationssignalzeitraum anzugeben; oder
Bestimmen, gemäß einer spezifizierten Entsprechung zwischen einem Synchronisationssignalzeitraum und einem CRC-Berechnungsmodus, eines CRC-Berechnungsmodus, der dem Synchronisationssignalzeitraum, der angegeben werden soll, entspricht, Durchführen von CRC-Berechnung an Anfangsinformationen in dem bestimmten CRC-Berechnungsmodus, um einen CRC-Wert zu erhalten, und Übertragen der Anfangsinformationen und des berechneten CRC-Werts auf dem physischen Kanal, um den Synchronisationssignalzeitraum anzugeben; oder Bestimmen, gemäß einer spezifizierten Entsprechung zwischen einem Synchronisationssignalzeitraum und einem Zeit-Frequenz-Ressourcenort, eines Zeit-Frequenz-Ressourcenorts, der dem Synchronisationssignalzeitraum, der angegeben werden soll, entspricht, und Hinzufügen des physischen Kanals zu dem bestimmten Zeit-Frequenz-Ressourcenort, um den Synchronisationssignalzeitraum anzugeben.

4. Endgerät, das Folgendes umfasst:
eine Empfangseinheit (50), ausgelegt zum Detektieren eines durch eine Basisstation übertragenen Synchronisationssignals; und
eine Bestimmungseinheit (51), ausgelegt zum Bestimmen eines Synchronisationssignalzeitraums, wobei der Synchronisationssignalzeitraum durch eine Basisstation, die mehrere Antennen für einen oder mehrere wirksame Strahlen aufweist, in einer zweiten Schleife eines Zweischleifenzugangs angewandt wird;
wobei das Endgerät ausgelegt ist zum Detektieren, in einer ersten Schleife des Zweischleifenzugangs, von ersten Synchronisationssignalen von einer Vielzahl von Strahlen, die durch die Basisstation übertragen wurden;
wobei das Endgerät ferner ausgelegt ist zum Senden, in der ersten Schleife des Zweischleifenzugangs, von Strahlkennungen an die Basisstation auf der Grundlage der detektierten ersten Synchronisationssignale; und
wobei die Bestimmungseinheit ausgelegt ist zum Bestimmen des durch die Basisstation in der zweiten Schleife des Zweischleifenzugangs angewandten Synchronisationssignalzeitraums unter Verwendung eines detektierten zweiten Synchronisationssignals; und ausgelegt ist zum Bestimmen eines physischen Kanals,
der dem zweiten Synchronisationssignal entspricht;
wobei, wenn der Synchronisationssignalzeitraum unter Verwendung des detektierten zweiten Synchronisationssignals bestimmt wird, die Bestimmungseinheit (51) insbesondere ausgelegt ist zum:
Bestimmen des Synchronisationssignalzeitraums unter Verwendung des physischen Kanals und
Bestimmen eines Verwürfelungscodes zum Verwürfeln des physischen Kanals, Suchen nach einer spezifizierten Entsprechung zwischen einem Synchronisationssignalzeitraum und einem Verwürfelungscode für einen Synchronisationssignalzeitraum, der dem Verwürfelungscode entspricht, und Verwenden des gefundenen Synchronisationssignalzeitraums als den bestimmten Synchronisationssignalzeitraum; oder
Bestimmen einer Maske zum Maskieren einer zyklischen Redundanzprüfung bzw. CRC, die dem physischen Kanal entspricht, Suchen nach einer spezifizierten Entsprechung zwischen einem Synchronisationssignalzeitraum und einer Maske für einen Synchronisationssignalzeitraum, der der Maske entspricht, und Verwenden des gefundenen Synchronisationssignalzeitraums als den bestimmten Synchronisationssignalzeitraum; oder
Empfangen von Anfangsinformationen und eines CRC-Werts auf dem physischen Kanal, Durchführen von CRC-Berechnung an den Anfangsinformationen in allen gespeicherten CRC-Berechnungsmodi, um entsprechende CRC-Werte zu erhalten, Verwenden eines CRC-Werts, der sich in den berechneten CRC-Werten befindet und der derselbe wie der empfangene CRC-Wert ist, als einen Ziel-CRC-Wert, Verwenden eines CRC-Berechnungsmodus, der dem Ziel-CRC-Wert entspricht, als einen Ziel-CRC-Berechnungsmodus, Suchen nach einer spezifizierten Entsprechung zwischen einem Synchronisationssignalzeitraum und einem CRC-Berechnungsmodus für einen Synchronisationssignalzeitraum, der dem Ziel-CRC-Berechnungsmodus entspricht, und Verwenden des gefundenen Synchronisationssignalzeitraums als den bestimmten Synchronisationssignalzeitraum; oder
Bestimmen eines Zeit-Frequenz-Ressourcenorts, an welchem der physische Kanal geführt wird, Suchen nach einer spezifizierten Entsprechung zwischen einem Synchronisationssignalzeitraum und einem Zeit-Frequenz-Ressourcenort für einen Synchronisationssignalzeitraum, der dem Zeit-Frequenz-Ressourcenort, an welchem der physische Kanal geführt wird, entspricht, und Verwenden des gefundenen Synchronisationssignalzeitraums als den bestimmten Synchronisationssignalzeitraum.

## Revendications

1. Procédé pour indiquer une période de signal de synchronisation, la période de signal de synchronisation étant appliquée par une station de base ayant de multiples antennes pour un ou plusieurs faisceaux effectifs, dans une seconde boucle d'un accès à deux boucles, le procédé comprenant :
la transmission, par la station de base, dans une première boucle de l'accès à deux boucles, de premiers signaux de synchronisation pour une pluralité de faisceaux ;
la réception, par la station de base, dans la première boucle de l'accès à deux boucles, d'identifiants de faisceau à partir d'un terminal ;
la détermination, par la station de base, des un ou plusieurs faisceaux effectifs sur la base des identifiants de faisceau reçus ;
la détermination (200), par la station de base, de la période de signal de synchronisation pour la seconde boucle de l'accès à deux boucles ;
la transmission, par la station de base, d'un canal physique correspondant à un second signal de synchronisation au terminal ;
l'indication (210), par la station de base, de la période de signal de synchronisation en utilisant le canal physique correspondant au second signal de synchronisation au terminal ;
dans lequel l'indication (210), par la station de base, de la période de signal de synchronisation en utilisant le canal physique correspondant au second signal de synchronisation comprend :
la détermination, par la station de base, selon une correspondance spécifiée entre une période de signal de synchronisation et un code de brouillage, d'un code de brouillage correspondant à la période de signal de synchronisation qui doit être indiquée, et le brouillage du canal physique en utilisant le code de brouillage déterminé, pour indiquer la période de signal de synchronisation ; ou
la détermination, par la station de base selon une correspondance spécifiée entre une période de signal de synchronisation et un masque, d'un masque correspondant à la période de signal de synchronisation qui doit être indiquée, et le masquage d'un contrôle de redondance cyclique, CRC, correspondant au canal physique en utilisant le masque, pour indiquer la période de signal de synchronisation ; ou
la détermination, par la station de base, selon une correspondance spécifiée entre une période de signal de synchronisation et un mode de computation de CRC, d'un mode de computation de CRC correspondant à la période de signal de synchronisation qui doit être indiquée, la réalisation d'une computation de CRC sur des informations initiales dans le mode de computation de CRC déterminé pour obtenir une valeur de CRC, et la transmission des informations initiales et de la valeur de CRC calculée sur le canal physique, pour indiquer la période de signal de synchronisation ; ou
la détermination, par la station de base, selon une correspondance spécifiée entre une période de signal de synchronisation et une localisation de ressources de temps-fréquence, d'une localisation de ressources de temps-fréquence correspondant à la période de signal de synchronisation qui doit être indiquée, et l'ajout du canal physique à la localisation de ressources de temps-fréquence déterminée, pour indiquer la période de signal de synchronisation.

2. Procédé pour indiquer une période de signal de synchronisation, la période de signal de synchronisation étant appliquée par une station de base ayant de multiples antennes pour un ou plusieurs faisceaux effectifs dans une seconde boucle d'un accès à deux boucles, le procédé comprenant :
la détection, par un terminal, dans une première boucle de l'accès à deux boucles, de premiers signaux de synchronisation d'une pluralité de faisceaux qui ont été transmis par la station de base ;
l'envoi, par le terminal, dans la première boucle de l'accès à deux boucles, d'identifiants de faisceau à la station de base sur la base des premiers signaux de synchronisation détectés ;
la détection (300), par le terminal, d'un second signal de synchronisation transmis par la station de base dans la seconde boucle de l'accès à deux boucles ;
la détermination, par le terminal, d'un canal physique correspondant au second signal de synchronisation ;
la détermination (310), par le terminal, de la période de signal de synchronisation en utilisant le second signal de synchronisation détecté en utilisant le canal physique ;
dans lequel la détermination (310), par le terminal, de la période de signal de synchronisation en utilisant le canal physique comprend :
la détermination, par le terminal, d'un code de brouillage pour brouiller le canal physique, la recherche d'une correspondance spécifiée entre une période de signal de synchronisation et un code de brouillage pour une période de signal de synchronisation correspondant au code de brouillage, et l'utilisation de la période de signal de synchronisation trouvée en tant que période de signal de synchronisation déterminée ; ou
la détermination, par le terminal, d'un masque pour masquer un contrôle de redondance cyclique (CRC) correspondant au canal physique, la recherche d'une correspondance spécifiée entre une période de signal de synchronisation et un masque pour une période de signal de synchronisation correspondant au masque, et l'utilisation de la période de signal de synchronisation trouvée en tant que période de signal de synchronisation déterminée ; ou
la réception, par le terminal, d'informations initiales et d'une valeur de CRC sur le canal physique, la réalisation d'une computation de CRC sur les informations initiales dans tous les modes de computation de CRC stockés pour obtenir des valeurs de CRC correspondantes, l'utilisation d'une valeur de CRC qui est dans les valeurs de CRC calculées et qui est la même que la valeur de CRC reçue en tant que valeur de CRC cible, l'utilisation d'un mode de computation de CRC correspondant à la valeur de CRC cible en tant que mode de computation de CRC cible, la recherche d'une correspondance spécifiée entre une période de signal de synchronisation et un mode de computation de CRC pour une période de signal de synchronisation correspondant au mode de computation de CRC cible, et l'utilisation de la période de signal de synchronisation trouvée en tant que période de signal de synchronisation déterminée ; ou
la détermination, par le terminal, d'une localisation de ressources de temps-fréquence à laquelle le canal physique est porté, la recherche d'une correspondance spécifiée entre une période de signal de synchronisation et une localisation de ressources de temps-fréquence pour une période de signal de synchronisation correspondant à la localisation de ressources de temps-fréquence à laquelle le canal physique est porté, et
l'utilisation de la période de signal de synchronisation trouvée en tant que période de signal de synchronisation déterminée.

3. Station de base ayant de multiples antennes et étant configurée pour indiquer une période de signal de synchronisation, la période de signal de synchronisation étant appliquée par la station de base pour un ou plusieurs faisceaux effectifs dans une seconde boucle d'un accès à deux boucles,
dans laquelle la station de base est configurée pour transmettre, dans une première boucle de l'accès à deux boucles, des premiers signaux de synchronisation pour une pluralité de faisceaux ;
dans laquelle la station de base est en outre configurée pour recevoir, dans la première boucle de l'accès à deux boucles, des identifiants de faisceau à partir d'un terminal ; dans laquelle la station de base est en outre configurée pour déterminer les un ou plusieurs faisceaux effectifs sur la base des identifiants de faisceau reçus ; et
dans laquelle la station de base comprend :
une unité de détermination (40), configurée pour déterminer la période de signal de synchronisation pour la seconde boucle de l'accès à deux boucles ;
une unité de transmission (42), configurée pour transmettre un canal physique correspondant à un second signal de synchronisation au terminal ; et
une unité d'indication (41), configurée pour indiquer la période de signal de synchronisation au terminal,
dans laquelle, lors de l'indication de la période de signal de synchronisation en utilisant le canal physique correspondant au second signal de synchronisation, l'unité d'indication (41) est spécifiquement configurée pour :
déterminer, selon une correspondance spécifiée entre une période de signal de synchronisation et un code de brouillage, un code de brouillage correspondant à la période de signal de synchronisation qui doit être indiquée, et brouiller le canal physique en utilisant le code de brouillage déterminé, pour indiquer la période de signal de synchronisation ; ou
déterminer, selon une correspondance spécifiée entre une période de signal de synchronisation et un masque, un masque correspondant à la période de signal de synchronisation qui doit être indiquée, et masquer un contrôle de redondance cyclique, CRC, correspondant au canal physique en utilisant le masque, pour indiquer la période de signal de synchronisation ; ou
déterminer, selon une correspondance spécifiée entre une période de signal de synchronisation et un mode de computation de CRC, un mode de computation de CRC correspondant à la période de signal de synchronisation qui doit être indiquée, réaliser une computation de CRC sur des informations initiales dans le mode de computation de CRC déterminé pour obtenir une valeur de CRC, et transmettre les informations initiales et la valeur de CRC calculée sur le canal physique, pour indiquer la période de signal de synchronisation ; ou
déterminer, selon une correspondance spécifiée entre une période de signal de synchronisation et une localisation de ressources de temps-fréquence, une localisation de ressources de temps-fréquence correspondant à la période de signal de synchronisation qui doit être indiquée, et ajouter le canal physique à la localisation de ressources de temps-fréquence déterminée, pour indiquer la période de signal de synchronisation.

4. Terminal, comprenant :
une unité de réception (50), configurée pour détecter un signal de synchronisation transmis par une station de base ; et
une unité de détermination (51), configurée pour déterminer une période de signal de synchronisation, la période de signal de synchronisation étant appliquée par une station de base ayant de multiples antennes pour un ou plusieurs faisceaux effectifs dans une seconde boucle d'un accès à deux boucles ;
dans lequel le terminal est configuré pour détecter, dans une première boucle de l'accès à deux boucles, des premiers signaux de synchronisation d'une pluralité de faisceaux qui ont été transmis par la station de base ;
dans lequel le terminal est en outre configuré pour envoyer, dans la première boucle de l'accès à deux boucles, des identifiants de faisceau à la station de base sur la base des premiers signaux de synchronisation détectés ; et
dans lequel l'unité de détermination est configurée pour déterminer la période de signal de synchronisation appliquée par la station de base dans la seconde boucle de l'accès à deux boucles en utilisant un second signal de synchronisation détecté ; et configurée pour déterminer un canal physique correspondant au second signal de synchronisation ;
dans lequel, lors de la détermination de la période de signal de synchronisation en utilisant le second signal de synchronisation détecté, l'unité de détermination (51) est spécifiquement configurée pour : déterminer la période de signal de synchronisation en utilisant le canal physique, et déterminer un code de brouillage pour brouiller le canal physique, rechercher une correspondance spécifiée entre une période de signal de synchronisation et un code de brouillage pour une période de signal de synchronisation correspondant au code de brouillage, et utiliser la période de signal de synchronisation trouvée en tant que période de signal de synchronisation déterminée ;
ou
déterminer un masque pour masquer un contrôle de redondance cyclique, CRC, correspondant au canal physique, rechercher une correspondance spécifiée entre une période de signal de synchronisation et un masque pour une période de signal de synchronisation correspondant au masque, et utiliser la période de signal de synchronisation trouvée en tant que période de signal de synchronisation déterminée ;
ou
recevoir des informations initiales et une valeur de CRC sur le canal physique, réaliser une computation de CRC sur les informations initiales dans tous les modes de computation de CRC stockés pour obtenir des valeurs de CRC correspondantes, utiliser une valeur de CRC qui est dans les valeurs de CRC calculées et qui est la même que la valeur de CRC reçue en tant que valeur de CRC cible, utiliser un mode de computation de CRC correspondant à la valeur de CRC cible en tant que mode de computation de CRC cible, rechercher une correspondance spécifiée entre une période de signal de synchronisation et un mode de computation de CRC pour une période de signal de synchronisation correspondant au mode de computation de CRC cible, et
utiliser la période de signal de synchronisation trouvée en tant que période de signal de synchronisation déterminée ; ou
déterminer une localisation de ressources de temps-fréquence à laquelle le canal physique est porté, rechercher une correspondance spécifiée entre une période de signal de synchronisation et une localisation de ressources de temps-fréquence pour une période de signal de synchronisation correspondant à la localisation de ressources de temps-fréquence à laquelle le canal physique est porté, et utiliser la période de signal de synchronisation trouvée en tant que période de signal de synchronisation déterminée.
